# EUROPÄISCHE PATENTSCHRIFT

(11) **EP 1 395 979 B1**
(45) Veröffentlichungstag und Bekanntmachung des Hinweises auf die Patenterteilung: **13.12.2006**
(21) Anmeldenummer: 02735393.7
(22) Anmeldetag: 29.05.2002
(51) Int. Cl.: G10L 15/22

(54) **VERFAHREN ZUR SPRACHERKENNUNG UND SPRACHERKENNUNGSSYSTEM**
VOICE-RECOGNITION METHOD AND VOICE-RECOGNITION SYSTEM
PROCEDE ET SYSTEME DE RECONNAISSANCE VOCALE

(30) Priorität: 15.06.2001 DE 10129005
(43) Veröffentlichungstag der Anmeldung: 10.03.2004
(73) Patentinhaber: Harman Becker Automotive Systems GmbH, 76307 Karlsbad (DE)
(72) Erfinder: ENDERLE, Harald, 89185 Hüttisheim (DE); GERL, Franz, 89233 Neu-Ulm (DE); Nüssle, Gerhard, 89134 Blaustein (DE)
(74) Vertreter: Grünecker, Kinkeldey, Stockmair & Schwanhäusser Anwaltssozietät
(86) Internationale Anmeldenummer: PCT/EP2002/005882
(87) Internationale Veröffentlichungsnummer: WO 2002/103678

(56) Entgegenhaltungen:
- EP-A- 0 905 662
- EP-A- 0 961 263
- WO-A-01/18793
- WO-A-99/00790
- US-A- 4 866 778

## Beschreibung

In zunehmenden Maße werden Verfahren zur Spracherkennung für unterschiedliche Aufgaben und Anwendungen benötigt, insbesondere um Abläufe oder Vorgänge sprachgesteuert und damit benutzerfreundlich zu gestalten. Oftmals muß der Benutzer hierbei mittels seiner Sprachäußerung ein bestimmtes Listenelement aus einer Gesamtliste von Listenelementen benennen; diese Sprachäußerung wird einer Spracherkennungseinheit zur Verarbeitung zugeführt, die anhand der verarbeiteten Sprachäußerung das wahrscheinlichste Listenelement auswählt.

Probleme treten jedoch insbesondere bei umfangreichen Gesamtlisten mit einer Vielzahl von Listenelementen auf, wie es bsp. in Zielführungssystemen oder Navigationssystemen bei Städtenamen oder Straßennamen als Listenelementen oder in Telefonsystemen bei Personennamen als Listenelementen der Fall ist; da die Spracherkennungseinheit nur eine begrenzte Anzahl von Sprachäußerungen des Benutzers verarbeiten kann (typischerweise liegt diese in der Größenordnung von wenigen tausend Worten und damit Listenelementen), können bestimmte Anwendungen entweder nicht oder nur mit großem Aufwand (aufwendige Aufbereitung und Verarbeitung der Sprachäußerung) durchgeführt werden.

Ein Beispiel für ein bekanntes Spracher-kennungssystem ist in WO-A-01/18793 offenbart.

Der Erfindung liegt die Aufgabe zugrunde, ein Verfahren zur Spracherkennung und ein Spracherkennungssystem anzugeben, mit denen auf einfache Weise und mit geringem Aufwand mit einer hohen Zuverlässigkeit eine Verarbeitung von Sprachäu-Berungen auch bei umfangreichen Gesamtlisten mit einer beliebigen Anzahl von Listenelementen ermöglicht wird.

Diese Aufgabe wird nach der Erfindung durch die Merkmale im Kennzeichen des Patentanspruchs 1 und des Patentanspruchs 14 gelöst. Vorteilhafte Ausgestaltungen der Erfindung sind Bestandteil der übrigen Patentansprüche.

Erfindungsgemäß wird zur Verarbeitung von Sprachäußerungen auch bei umfangreichen Gesamtlisten mit einer beliebigen Anzahl von Listenelementen eine Clusterung der Gesamtliste in eine auf einfache Weise zu verarbeitende Einheit mit einem auf beliebige Arten von Daten als Listenelemente anwendbaren Verfahren und Spracherkennungssystem durchgeführt, indem der Benutzer zur Auswahl eines Listenelements sowohl die vollständige Bezeichnung des gewünschten Listenelements (das Gesamtwort des gewünschten Listenelements) als auch mindestens ein Anfangszeichen des gewünschten Listenelements (d.h. insbesondere mindestens einen Anfangsbuchstaben oder eine Anfangsziffer des gewünschten Listenelements) als Einzelzeichen in einer vorgegebenen Reihenfolge benennen (sprechen) muß; die gesamte aus den beiden aufeinanderfolgenden Spracheingaben Gesamtwort und Anfangszeichen bestehende Sprachäußerung des Benutzers wird von einer Spracherkennungseinheit durch ein spezielles Trennverfahren (das sogenannte "word-spotting-Verfahren") in diese beiden Bestandteile Gesamtwort und Einzelzeichen zerlegt. Die beiden getrennten Bestandteile Gesamtwort und Einzelzeichen werden separat weiterverarbeitet, indem für den den Einzelzeichen zugeordneten Teil der Sprachäußerung (d.h. für die anhand der gesprochenen Anfangszeichen erkannten Zeichenfolgen) ein Abgleichvorgang ("matching") mit einer die Gesamtzahl der Listenelemente enthaltenden Datenbank durchgeführt wird und hieraus eine Teilliste mit einer eingeschränkten Anzahl an Listenelementen erzeugt wird, während der nicht als Einzelzeichen erkannte und somit dem Gesamtwort zugeordnete Teil der Sprachäußerung (d.h. das gesprochene Gesamtwort der SprachäuBerung) gespeichert wird; anschließend werden das gespeicherte Gesamtwort und die Listenelemente der anhand der Zeichenfolge des Einzelzeichens bzw. der Einzelzeichen generierten Teilliste der mit dem Vokabular der Teilliste konfigurierten Spracherkennungseinheit zugeführt. Abhängig von diesem Vergleich wird ein Erkennungsergebnis mit dem wahrscheinlichsten Listenelement generiert, das dem Benutzer auf geeignete Weise mitgeteilt wird.

Als Sprachäußerung muß der Bediener vorzugsweise hierbei neben der vollständigen Bezeichnung des gewünschten Listenelements (dem Gesamtwort des gewünschten Listenelements) mehrere Anfangszeichen des gewünschten Listenelements als sukzessive Einzelzeichen vornehmen (sprechen), d.h. mehr als ein Anfangszeichen des gewünschten Listenelements; die erforderliche Anzahl der Anfangszeichen in der Sprachäußerung wird insbesondere abhängig von der Anzahl der Listenelemente der Gesamtliste und der Kapazität des Spracherkennungssystems bzw. der Spracherkennungseinheit vorgegeben. Die beiden Spracheingaben Gesamtwort und Anfangszeichen können entweder unmittelbar hintereinander vorgenommen werden oder mit einem geringen zeitlichen Abstand zueinander (in zwei zeitlich getrennten Schritten). Die Reihenfolge der beiden Spracheingaben Gesamtwort und Anfangszeichen kann vom Spracherkennungssystem fest vorgegeben werden oder vom Benutzer nach Wunsch wählbar vorgegeben und hiermit das Spracherkennungssystem konfiguriert werden; falls zuerst die Spracheingabe des Gesamtworts und anschließend die Spracheingabe des Anfangszeichens oder der Anfangszeichen vorgenommen wird, ist für den Benutzer hierdurch vorteilhafterweise die Spracheingabe des Anfangszeichens oder der Anfangszeichen zu einem Zeitpunkt möglich, zu dem das Gesamtwort durch dessen vorangegangene Spracheingabe noch präsent ist.

Bei der Zerlegung der Sprachäußerung des Benutzers in die beiden Spracheingaben (in die beiden Bestandteile) Gesamtwort und Einzelzeichen wird im erwähnten Trennverfahren (word-spotting-Verfahren) in einem ersten Verfahrensschritt von der Spracherkennungseinheit eine Suche nach Einzelzeichen (Buchstaben, Ziffern) durchgeführt und in einem zweiten Verfahrensschritt eine Zuordnung zu Ganzworten (Gesamtworten) vorgenommen. Hierzu wird die Spracherkennungseinheit des Spracherkennungssystems durch eine Datenbank mit einem bestimmtem Vokabular konfiguriert, insbesondere mit den relevanten Zeichen (Buchstaben, Ziffern etc.) und mit nicht im Wortschatz der relevanten Zeichen enthaltenen Zeichenfolgen (sogenannten out of vocabulary Worten); diese Zeichenfolgen werden mit größerer Wahrscheinlichkeit als die Einzelzeichen Gesamtworten zugeordnet, so daß auch das in der Sprachäußerung enthaltene gesprochene Gesamtwort als Spracheingabe dieser out of vocabulary Datenmenge zugeordnet wird. Durch ein insbesondere vom Alphabet der jeweiligen Landessprache und/oder von der Applikation des Spracherkennungssystems abhängiges vorgegebenes Erkennungsvokabular, das aus den möglichen Zeichen (Buchstaben, Ziffern...) der jeweiligen Namen der Listenelemente besteht, kann nun die in der Sprachäußerung enthaltene gesprochene, aus mindestens einem Anfangszeichen des gewünschten Listenelements bestehende Zeichenfolge der Einzelzeichen in eine Zeichenfolge geschriebener Einzelzeichen gewandelt werden.

Um eine Fehlertoleranz gegenüber Eingabefehlern und Aussprachefehlern des Benutzers sowie Verwechslungen infolge undeutlichen Spracheingaben des Benutzers zu ermöglichen, wird anhand der gesprochenen Anfangszeichen eine Hypothesenliste der erkannten und gewandelten Zeichenfolgen der Einzelzeichen erstellt (d.h. diese Hypothesenliste enthält Zeichenfolgen aus mindestens einem Einzelzeichen, bei denen zum von der Spracherkennungseinheit erkannten Einzelzeichen ähnliche und verwechslungsträchtige Zeichen berücksichtigt werden).

Diese Hypothesenliste mit Zeichenfolgen aus Einzelzeichen als mindestens ein mögliches Anfangszeichen des gewünschten Listenelements wird dem nachfolgenden Abgleichvorgang (matching) zur Verfügung gestellt, bei dem anhand der Zeichenfolgen eine Teilmenge aus der Gesamtmenge der Listenelemente generiert wird (d.h. eine Teilliste der Gesamtliste), wodurch der gesamte Vorrat an möglichen Listenelementen auf eine verarbeitbare Größe eingeschränkt wird; der durch Vergleich der Hypothesenliste der erkannten Einzelzeichen mit den in der Gesamtliste gespeicherten Anfangszeichen vorgenommene Abgleichvorgang - dabei wird die unter Umständen fehlerhafte Hypothesenliste der erkannten Einzelzeichen mit dem Vorrat an tatsächlich vorhandenen Listenelementen der Gesamtliste abgeglichen - stellt ein fehlertolerantes Filtern der Gesamtliste dar (eine Fehlertoleranz ist erforderlich, da die von der Spracherkennungseinheit im Rahmen des Trennverfahrens gelieferten Zeichenfolgen nicht immer einer korrekten Spracheingabe oder einer korrekten Spracherkennung entsprechen müssen). Die Hypothesenliste der erkannten Einzelzeichen wird anhand der Einträge in der Gesamtliste (der Listenelemente der Gesamtliste) komplettiert und diese extrahierte Liste als Teilliste mit gültigen Listenelementen dargestellt. Die maximale Länge der extrahierten Liste (Teilliste) kann in Abhängigkeit von der Datenmenge der Gesamtliste, den Eigenschaften der Spracherkennungseinheit und der minimalen Anzahl von gesprochenen Anfangszeichen (Buchstaben, Ziffern ....) in der Sprachäußerung einmal festgelegt und als Einstellungsparameter in der Datenbank für den Abgleichvorgang vorgegeben werden. Für die Eingabe von Navigationszielen (Ortsnamen) ist bsp. eine Größenordnung von 500 bis 1000 Listenelementen für die Teilliste angemessen. Anhand der Listenelemente der Teilliste wird nun ein neues Vokabular für die Spracherkennungseinheit erzeugt und die eingeschränkte Teilliste durch die Spracherkennungseinheit mit der aus der Sprachäußerung abgetrennten und gespeicherten Spracheingabe Gesamtwort des gewünschten Listenelementes verglichen; hierdurch erhält man das dem gewünschten Listenelement mit der größten Wahrscheinlichkeit entsprechende Listenelement als Erkennungsergebnis, das dem Benutzer auf passende Weise durch eine Ausgabeeinheit oder Anzeigeeinheit (insbesondere optisch und/oder akustisch) mitgeteilt wird.

Vorteilhafterweise ist mit dem vorgestellten Verfahren und Spracherkennungssystem eine generische Unterteilung umfangreicher (beliebig großer) Datenlisten (Gesamtlisten), bsp. von Telefonbüchern oder geographischen Datenlisten wie Ortsnamen oder Straßennamen, in kleinere auf einfache Weise verarbeitbare Einheiten (Teillisten) möglich. Da zwei Erkennungsvorgänge für die Sprachäußerung vorgenommen werden (einerseits hinsichtlich Einzelzeichen, andererseits hinsichtlich Gesamtworte), ist eine hohe Genauigkeit und Zuverlässigkeit für die Spracherkennung gegeben, d.h. insbesondere eine hohe Wahrscheinlichkeit für die Erkennung des richtigen gewünschten Listenelements; aufgrund der Fehlertoleranz sowohl beim Trennvorgang als auch beim Abgleichvorgang (somit ist eine Fehlertoleranz zweifach implementiert), können Eingabefehler oder ungenaue Eingaben des Benutzers kompensiert werden. Insbesondere wenn bei der Sprachäußerung vom Benutzer als erste Spracheingabe zunächst das Gesamtwort und anschließend als zweite Spracheingabe das oder die Anfangszeichen gesprochen wird, ist der Aufwand für den Benutzer sehr gering.

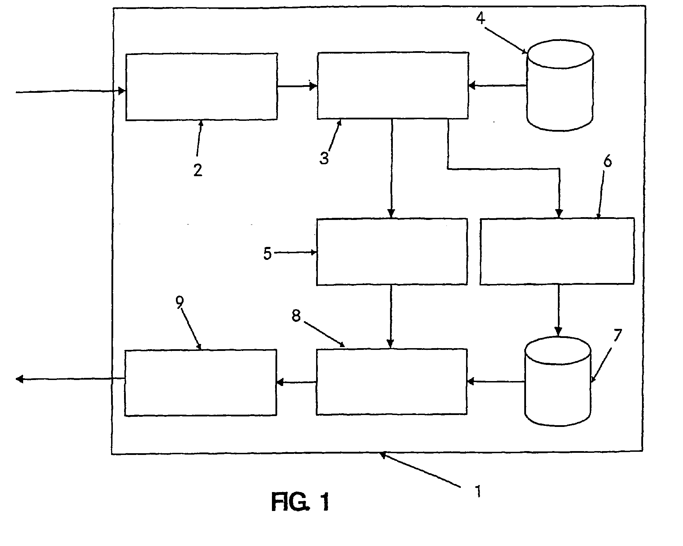

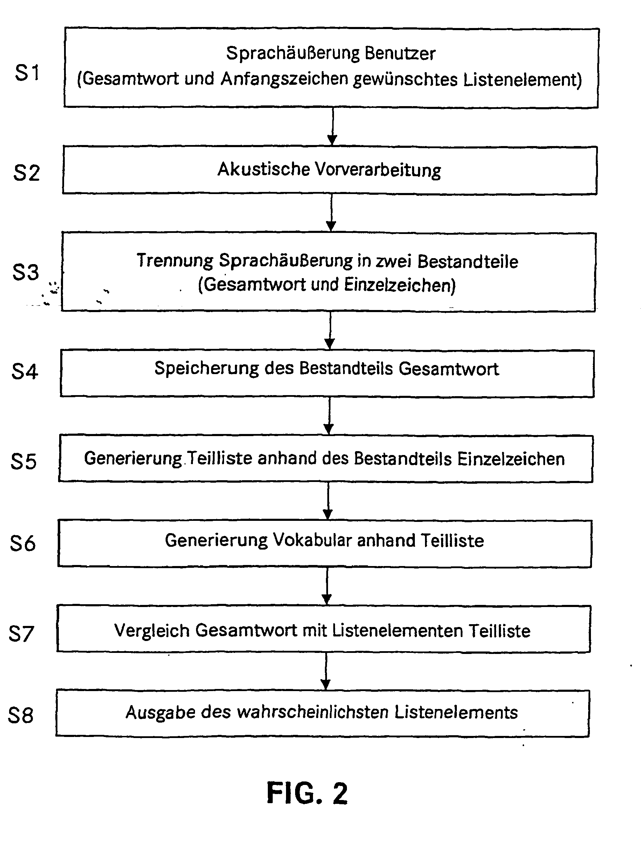

Im Zusammenhang mit der Zeichnung (Figuren 1 und 2) soll die Erfindung anhand eines Ausführungsbeispiels erläutert werden.

Hierbei zeigen:
Figur 1 die Systemkomponenten des Spracherkennungssystems,
Figur 2 ein Ablaufschema des Verfahrens zur Spracherkennung.

Das Spracherkennungssystem ist bsp. im Navigationssystem eines Kraftfahrzeugs implementiert, bei dem durch die Sprachäußerung eines Benutzers zur Zielführung Navigationsdaten (Ortsnamen, Straßennamen) als gewünschte Listenelemente aus einer umfangreichen Gesamtliste ausgewählt werden können; bsp. umfaßt die Gesamtliste als Navigationsdaten und damit als Listenelemente einige Zehntausend Ortsnamen und einige Hunderttausend Straßennamen.

Gemäß der Figur 1 sind zur Spracherkennung der Sprachäußerung des Benutzers als Systemkomponenten des Spracherkennungssystems 1 vorgesehen:
- eine Eingabeeinheit 2 zur Eingabe der Sprachäußerung des Benutzers (bsp. ein Mikrofon),
- eine mit dem Vokabular 4 konfigurierte Spracherkennungseinheit 3 zur Trennung der Sprachäußerung des Benutzers in die beiden Bestandteile (Spracheingaben) Gesamtwort und Einzelzeichen,
- eine Speichereinheit 5 zur Speicherung des bei der Sprachäußerung des Benutzers erkannten und abgetrennten Bestandteils Gesamtwort,
- eine Datenbank 6 zur Generierung einer Teilliste anhand des bei der SprachäuBerung des Benutzers erkannten Bestandteils Einzelzeichen,
- die mit dem Vokabular 7 konfigurierte Spracherkennungseinheit 8 zum Vergleich der Listenelemente der Teilliste mit dem Gesamtwort,
- eine Ausgabeeinheit 9 zur bsp. akustischen und/oder optischen Übermittlung des für die Sprachäußerung des Benutzers als wahrscheinlichstes Listenelement erkannten Listenelements der Teilliste an den Benutzer (bsp. akustisch über einen Lautsprecher oder optisch über eine bsp. als Display ausgebildete Anzeigeeinheit).

Gemäß der Figur 2 sind zur Spracherkennung der Sprachäußerung des Benutzers, bsp. zur Auswahl des gewünschten Listenelements "Stuttgart" aus einer die Ortsnamen von Deutschland als Listenelemente enthaltenden Gesamtliste folgende Verfahrensschritte S1 bis S8 vorgesehen:
- S1: Vom Benutzer muß als Sprachäußerung zunächst der gesamte Ortsnamen gesprochen werden (Gesamtwort als erste Spracheingabe, bsp. "Stuttgart"), anschließend müssen mehrere Anfangszeichen (bsp. vier Anfangsbuchstaben) des Ortsnamens sukzessive als Einzelbuchstaben gesprochen (buchstabiert) werden (Anfangsbuchstaben als zweite Spracheingabe, bsp. "S T U T").
- S2: In der Spracherkennungseinheit 3 wird eine akustische Vorverarbeitung der Sprachäußerung vorgenommen (Eliminierung von störenden Umgebungsgeräuschen etc.).
- S3: Die gesamte Sprachäußerung des Benutzers (bsp. "Stuttgart" und "S T U T") wird in der Spracherkennungseinheit 3 durch das word spotting Verfahren in die beiden Spracheingaben Gesamtwort (bsp. "Stuttgart") und Einzelzeichen (bsp. "S T U T") getrennt. Hierbei wird durch die mit dem Vokabular 4 (d.h. den erlaubten Buchstaben, Ziffern und Zeichen) der deutschen Sprache konfigurierte Spracherkennungseinheit 3 nach einzelnen Zeichen (d.h. nach Buchstaben, Ziffern und Zeichen) in der Sprachäußerung des Benutzers gesucht; als erstes Einzelzeichen wird hierbei der buchstabierte Einzelbuchstaben "S" erkannt und der vorhergehende Teil der Sprachäußerung (d.h. die erste Spracheingabe) als Gesamtwort der nicht zu Einzelzeichen gehörigen out of vocabulary Datenmenge zugeordnet. Mit den auf das erste erkannte Einzelzeichen (auf den ersten Einzelbuchstaben) folgenden Einzelzeichen wird die aus bsp. vier Anfangsbuchstaben bestehende Zeichenfolge zusammengesetzt, wobei eine Hypothesenliste von Zeichenfolgen erstellt wird, in der alternativ auch Zeichenfolgen mit ähnlich klingenden und/oder leicht verwechselbaren Buchstaben enthalten sind (bsp. ist der Buchstabe "S" leicht mit "F" verwechselbar oder der Buchstabe "T" leicht mit "E" oder "D" verwechselbar, so daß die Hypothesenliste bsp. außer der Zeichenfolge "STUT" auch die Zeichenfolgen "FDUT", "SDUT", "STOD", "STOE", "SDOT", "SDOD", "STUD", "SPUT", "SEUT", "GTUT" und "ESTU" enthält).
- S4: das der out of vocabulary Datenmenge zugeordnete Gesamtwort als erste Spracheingabe der Sprachäußerung des Benutzers (bsp. "Stuttgart") wird in der Speichereinheit 4 gespeichert.
- S5: Anhand der von der Spracherkennungseinheit 3 gelieferten Hypothesenliste von Zeichenfolgen wird ein Listenabgleich mit der Gesamtliste an Ortsnamen vorgenommen und hieraus eine Teilliste an Ortsnamen generiert, deren Anfangsbuchstaben mit den Zeichenfolgen der Hypothesenliste übereinstimmen oder diesen ähneln; d.h. die Zeichenfolgen der Hypothesenliste werden auf der Grundlage der Datenbank 6 zu vollständigen in der Gesamtliste an Ortsnamen enthaltenen Listenelementen (Ortsnamen) komplettiert, wobei auch hier Listenelemente (Ortsnamen) mit ähnlich klingenden und/oder leicht verwechselbaren Buchstaben in den Zeichenfolgen der Hypothesenliste berücksichtigt werden (bsp. werden die obigen Zeichenfolgen u.a. zu den Ortsnamen "Stuttgart", Stotzard", "Sauggart", "Sittard", "Stutengarten", "Stutensee" komplettiert, insgesamt bsp. zu ca. 200 Ortsnamen als Listenelemente).
- S6: Mit dieser aus dem Listenabgleich der Gesamtliste mit der Hypothesenliste generierten Teilliste an Ortsnamen wird die Spracherkennungseinheit 3 neu konfiguriert, d.h. für die Spracherkennungseinheit 3 wird ein neues (gegenüber der Gesamtliste wesentlich eingeschränktes) Vokabular 7 für den Erkennungsvorgang bereitgestellt.
- S7: In der mit dem Vokabular 7 neu konfigurierten Spracherkennungseinheit 8 wird nun das in der Speichereinheit 4 gespeicherte Gesamtwort (bsp. "Stuttgart") mit den Listenelementen (Ortsnamen) der Teilliste verglichen (d.h. mit den Ortsnamen "Stuttgart", Stotzard", "Sauggart", "Sittard", "Stutengarten", "Stutensee" etc.) und anhand einer Klassifikation durch die Spracherkennungseinheit 8 das dem Gesamtwort (bsp. "Stuttgart") am wahrscheinlichsten entsprechende Listenelement der Teilliste als Erkennungsergebnis ausgewählt (bsp. der Ortsname "Stuttgart").
- S8: Das Erkennungsergebnis der Spracherkennungseinheit 8 (bsp. der Ortsname "Stuttgart") wird dem Benutzer insbesondere über eine akustische Ausgabeeinheit (bsp. einen Lautsprecher) oder über eine Anzeigeeinheit als optischer Ausgabeeinheit (bsp. ein Display) mitgeteilt.

## Patentansprüche

1. Verfahren zur Spracherkennung von Sprachäußerungen eines Benutzers zur Auswahl eines gewünschten Listenelements aus einer Gesamtliste von Listenelementen,
**dadurch gekennzeichnet,**
**daß** eine aus zeitlich aufeinanderfolgenden Spracheingaben mit sowohl dem Gesamtwort des gewünschten Listenelements als auch mindestens einem Anfangszeichen des gewünschten Listenelements bestehende Sprachäußerung des Benutzers erfaßt wird,
**daß** die Sprachäußerung in die Bestandteile Gesamtwort und Einzelzeichen zerlegt wird,
**daß** die Bestandteile Gesamtwort und Einzelzeichen getrennt voneinander verarbeitet werden,
und **daß** für das Gesamtwort eine anhand der Einzelzeichen konfigurierte Spracherkennung durchgeführt wird.

2. Verfahren nach Anspruch 1, **dadurch gekennzeichnet,**
**daß** das als Bestandteil der Sprachäußerung abgetrennte Gesamtwort des gewünschten Listenelements gespeichert wird,
**daß** anhand des aus der Sprachäußerung herausgefilterten Bestandteils Einzelzeichen aus der Gesamtliste der Listenelemente eine Teilliste der Listenelemente generiert wird,
**daß** bei der Spracherkennung der beiden verarbeiteten Bestandteile der Sprachäußerung die Listenelemente der Teilliste mit dem gespeicherten Gesamtwort des gewünschten Listenelements verglichen werden,
und **daß** anhand dieses Vergleichs ein Erkennungsergebnis als wahrscheinlichstes dem gewünschten Listenelement entsprechendes Listenelement generiert wird.

3. Verfahren nach Anspruch 1 oder 2, **dadurch gekennzeichnet, daß** die Sprachäußerung durch eine Spracherkennung von Einzelzeichen in die Bestandteile Gesamtwort und Einzelzeichen zerlegt wird.

4. Verfahren nach Anspruch 3, **dadurch gekennzeichnet, daß** der nicht Einzelzeichen zugeordnete Teil der Sprachäußerung des Benutzers als Gesamtwort gespeichert wird.

5. Verfahren nach einem der Ansprüche 1 bis 4, **dadurch gekennzeichnet, daß** die beiden Spracheingaben der Sprachäußerung unmittelbar zeitlich aufeinanderfolgen.

6. Verfahren nach einem der Ansprüche 1 bis 4, **dadurch gekennzeichnet, daß** die beiden Spracheingaben der Sprachäußerung durch eine kurze Pause getrennnt zeitlich aufeinanderfolgen.

7. Verfahren nach einem der Ansprüche 1 bis 6, **dadurch gekennzeichnet, daß** in der Sprachäußerung des Benutzers als erste Spracheingabe zunächst das Gesamtwort des gewünschten Listenelements und als zweite Spracheingabe anschließend das mindestens eine Anfangszeichen des gewünschten Listenelements gesprochen wird.

8. Verfahren nach einem der Ansprüche 1 bis 6, **dadurch gekennzeichnet, daß** in der Sprachäußerung des Benutzers als erste Spracheingabe zunächst das mindestens eine Anfangszeichen des gewünschten Listenelements und als zweite Spracheingabe anschließend das Gesamtwort des gewünschten Listenelements gesprochen wird.

9. Verfahren nach einem der Ansprüche 1 bis 8, **dadurch gekennzeichnet, daß** das wahrscheinlichste dem gewünschten Listenelement entsprechende Listenelement als Erkennungsergebnis dem Benutzer akustisch und/oder optisch übermittelt wird.

10. Verfahren nach einem der Ansprüche 1 bis 9, **dadurch gekennzeichnet, daß** zur Generierung der Teilliste ein Abgleichvorgang einer Hypothesenliste mit einer mindestens ein mögliches Anfangszeichen des gewünschten Listenelements umfassenden Zeichenfolge mit der Gesamtliste von Listenelementen vorgenommen wird.

11. Verfahren nach Anspruch 10, **dadurch gekennzeichnet, daß** die Zeichenfolgen der Hypothesenliste aus dem aus der Sprachäußerung herausgefilterten Bestandteil Einzelzeichen des gewünschten Listenelements und aus den zu den herausgefilterten Einzelzeichen ähnlichen Zeichen gebildet werden.

12. Verfahren nach Anspruch 10 oder 11, **dadurch gekennzeichnet, daß** zur Bildung der Teilliste die Zeichenfolgen der Hypothesenliste zu den in der Gesamtliste enthaltenen Listenelementen ergänzt werden.

13. Verfahren nach einem der Ansprüche 1 bis 12 zur Spracherkennung in einem Zielführungssystem oder Navigationssystem.

14. Spracherkennungssystem (1) zur Spracherkennung von Sprachäußerungen eines Benutzers zur Auswahl eines gewünschten Listenelements aus einer Gesamtliste von Listenelementen, mit:
einer Eingabeeinheit (2) zur Spracheingabe einer aus zeitlich aufeinanderfolgenden Spracheingaben mit dem Gesamtwort des gewünschten Listenelements und mindestens einem Anfangszeichen des gewünschten Listenelements bestehende Sprachäußerung des Benutzers,
einer Spracherkennungseinheit (3) zur Zerlegung der Sprachäußerung in die Bestandteile Gesamtwort und Einzelzeichen,
einer Speichereinheit (5) zur Speicherung des Gesamtworts,
einer Datenbank (6) mit der Gesamtliste von Listenelementen zur Erstellung einer Teilliste anhand des Abgleichs mit den Einzelzeichen,
einer mit den anhand der Listenelemente der Teilliste erstellten Vokabular (7) konfigurierten Spracherkennungseinheit (8) zum Vergleich des gespeicherten Gesamtworts des gewünschten Listenelements mit den Listenelementen der Teilliste,
und einer Ausgabeeinheit (9) zur Übermittlung des als wahrscheinlichstes gewünschtes Listenelement bewerteten Listenelements.

## Claims

1. A process for speech recognition of a user's speech utterances to select a desired list element from a complete list of list elements,
**characterised in that**
a user's speech utterance, consisting of temporally consecutive speech inputs with the whole word of the desired list element and at least one starting character of the desired list element are recorded,
the speech utterance is resolved into whole-word and individual-character components, the whole-word and individual-character components, are processed separately from each other,
and a speech recognition, configured with the individual characters, is conducted for the whole word.

2. A process according to claim 1, **characterised in that**
the whole word of the desired list element that is separated as a component of the speech utterance, is stored,
using the individual-character component filtered out of the speech utterance, a partial list of list elements is generated from the complete list of list elements,
during the speech recognition of the two processed components of the speech utterance, the list elements of the partial list are compared with the stored whole word of the desired list element,
and using this comparison, a recognition result is generated as the list element most probably corresponding to the desired list element.

3. A process according to claim 1 or 2, **characterised in that** the speech utterance is broken down into whole-word and individual-character components, using speech recognition of individual characters.

4. A process according to claim 3, **characterised in that** the part of the user's speech utterance not corresponding to individual characters is stored as a whole word.

5. A process according to claims 1 through 4, **characterised in that** the two speech inputs of the speech utterance are immediately successive in time.

6. A process according to claims 1 through 4, **characterised in that** the two speech inputs of the speech utterance are successive in time, separated by a short pause.

7. A process according to one of claims 1 through 6, **characterised in that** in the user's speech utterance, initially, as a first speech input, the whole word of the desired list element is spoken, and following that, as a second speech input, at least one starting character of the desired list element is spoken.

8. A process according to one of claims 1 through 6, **characterised in that** in the user's speech utterance, initially, as a first speech input, at least one starting character of the desired list element is spoken, and following that, as a second speech input, the whole word of the desired list element.

9. A process according to one of claims 1 through 8, **characterised in that** the list element most probably corresponding to the desired list element is communicated as the recognition result to the user, acoustically and/or optically.

10. A process according one of claims 1 through 9, **characterised in that** to generate the partial list, a comparison operation of a hypothesis list, containing character sequences with at least one possible starting character of the desired list element, is conducted with the complete list of list elements.

11. A process according to claim 10, **characterised in that** the character sequences of the hypothesis list are formed from the individual characters of the desired list-element component, filtered out of the speech utterance, and from characters similar to those filtered individual characters.

12. A process according to claim 10 or 11, **characterised in that** to form the partial list, the character sequences of the hypothesis list are supplemented with list elements contained in the complete list.

13. A process according to one of claims 1 through 12 for speech recognition in a route-guidance system or navigation system.

14. A speech-recognition system (1) for speech-recognition of a user's speech utterances to select of a desired list element out of a complete list of list elements, with:
an input unit (2) for speech input of a user's speech utterance, consisting of a time-sequential speech input with the whole word of the desired list element and at least one starting character of the desired list element, a speech-recognition unit (3) to resolve the speech utterance into two components, whole word and individual characters,
a storage unit (5) to store the whole word,
a database (6) with the complete list of list elements, for creation of a partial list using the comparison with the individual characters,
a speech-recognition unit (8), configured with the vocabulary (7) created using the list elements of the partial list, to compare the stored whole word of the desired list element with the list elements of the partial list,
and an output unit (9) for communication of the list element evaluated as the most probable list element.

## Revendications

1. Procédé de reconnaissance vocale de paroles d'un utilisateur en vue de la sélection d'un élément de liste souhaité parmi une liste globale d'éléments de liste, **caractérisé en ce qu'**une parole de l'utilisateur composée d'entrées vocales se succédant dans le temps, avec non seulement le mot entier de l'élément de liste souhaité, mais aussi au moins un premier caractère de l'élément de liste souhaité, est acquise, **en ce que** la parole est divisée en composants mot entier et caractères individuels, **en ce que** les composants mot entier et caractères individuels sont traités séparément l'un de l'autre, et **en ce qu'**une reconnaissance vocale configurée au moyen des caractères individuels est exécutée pour le mot entier.

2. Procédé selon la revendication 1, **caractérisé en ce que** le mot entier de l'élément de liste souhaité, séparé en tant qu'élément de la parole, est enregistré, **en ce qu'**une liste partielle des éléments de liste est générée à partir de la liste globale des éléments de liste au moyen du composant caractères individuels filtré à partir de la parole, **en ce que** lors de la reconnaissance vocale des deux composants traités de la parole, les éléments de liste de la liste partielle sont comparés avec le mot entier enregistré de l'élément de liste souhaité, et **en ce qu'**au moyen de cette comparaison, un résultat de reconnaissance est généré en tant qu'élément de liste le plus probable correspondant à l'élément de liste souhaité.

3. Procédé selon la revendication 1 ou 2, **caractérisé en ce que** la parole est divisée en composants mot entier et caractère individuels grâce à une reconnaissance vocale de caractères individuels.

4. Procédé selon la revendication 3, **caractérisé en ce que** la partie de la parole de l'utilisateur non associée à des caractères individuels est enregistrée en tant que mot entier.

5. Procédé selon l'une quelconque des revendications 1 à 4, **caractérisé en ce que** les deux entrées vocales de la parole se succèdent immédiatement dans le temps.

6. Procédé selon l'une quelconque des revendications 1 à 4, **caractérisé en ce que** les deux entrées vocales de la parole se succèdent dans le temps, séparées par une courte pause.

7. Procédé selon l'une quelconque des revendications 1 à 6, **caractérisé en ce que** le mot entier de l'élément de liste souhaité est prononcé en premier lieu dans la parole de l'utilisateur en tant que première entrée vocale et le au moins un premier caractère de l'élément de liste souhaité est prononcé ensuite en tant que seconde entrée vocale.

8. Procédé selon l'une quelconque des revendications 1 à 6, **caractérisé en ce que** le au moins un premier caractère de l'élément de liste souhaité est prononcé en premier lieu dans la parole de l'utilisateur en tant que première entrée vocale et le mot entier de l'élément de liste souhaité est prononcé ensuite en tant que seconde entrée vocale.

9. Procédé selon l'une quelconque des revendications 1 à 8, **caractérisé en ce que** l'élément de liste le plus probable correspondant à l'élément de liste souhaité est transmis acoustiquement et/ou optiquement à l'utilisateur en tant que résultat de reconnaissance.

10. Procédé selon l'une quelconque des revendications 1 à 9, **caractérisé en ce qu'**en vue de la génération de la liste partielle, un processus d'alignement d'une liste d'hypothèses avec une séquence de caractères composée d'au moins un premier caractère possible de l'élément de liste souhaité avec la liste globale d'éléments de liste est opéré.

11. Procédé selon la revendication 10, **caractérisé en ce que** les séquences de caractères de la liste d'hypothèses sont constituées du composant caractères individuels de l'élément de liste souhaité filtré à partir de la parole et des caractères semblables au premier caractère filtré.

12. Procédé selon la revendication 10 ou 11, **caractérisé en ce qu'**en vue de la constitution de la liste partielle, les séquences de caractères de la liste d'hypothèses sont ajoutées aux éléments de liste contenus dans la liste globale.

13. Procédé selon l'une quelconque des revendications 1 à 12 destiné à la reconnaissance vocale dans un système de guidage ou un système de navigation.

14. Système de reconnaissance vocale (1) destiné à la reconnaissance vocale de paroles d'un utilisateur en vue de la sélection d'un élément de liste souhaité parmi une liste globale d'éléments de liste, comprenant :
une unité d'entrée (2) destinée à l'entrée d'une parole de l'utilisateur se composant d'entrées vocales se succédant dans le temps, avec le mot entier de l'élément de liste souhaité et au moins un premier caractère de l'élément de liste souhaité,
une unité de reconnaissance vocale (3) destinée à la subdivision de la parole en composants mot entier et caractères individuels,
une unité de mémoire (5) destinée à l'enregistrement du mot entier,
une base de données (6) avec la liste globale des éléments de liste en vue de l'établissement d'une liste partielle au moyen de l'alignement avec le caractère individuel,
une unité de reconnaissance vocale (8) configurée avec le vocabulaire (7) établi au moyen des éléments de liste de la liste partielle et destinée à la comparaison du mot entier enregistré de l'élément de liste souhaité avec les éléments de liste de la liste partielle,
et une unité de sortie (9) destinée à la transmission de l'élément de liste estimé comme élément de liste souhaité le plus probable.
